# EUROPÄISCHE PATENTSCHRIFT

(11) **EP 0 339 432 B1**
(45) Veröffentlichungstag und Bekanntmachung des Hinweises auf die Patenterteilung: **11.01.1995**
(21) Anmeldenummer: 89106885.0
(22) Anmeldetag: 18.04.1989
(51) Int. Cl.: H04Q 3/545, H04M 9/00, H04M 11/06, H04M 3/42

(54) **Verfahren für eine rechnergesteuerte Vermittlungseinrichtung, insbesondere Key-Fernsprechvermittlungseinrichtung, bei der Datenendgeräte und Fernsprechendgeräte alternativ anschaltbar sind**
Method for a calculator-controlled switching device, especially for a key-telephone exchange, in which data and telephone terminals are connectible alternatively
Méthode pour une installation de commutation commandée par calculateur, en particulier pour un central téléphonique à touches dans lequel des terminaux de données et des terminaux téléphoniques sont connectables alternativement

(30) Priorität: 26.04.1988 DE 3814065
(43) Veröffentlichungstag der Anmeldung: 02.11.1989
(73) Patentinhaber: SIEMENS AKTIENGESELLSCHAFT, 80333 München (DE)
(72) Erfinder: Böttger, Detlev, Dipl.-Ing., D-5840 Schwerte (DE); Dziennus, Norbert, D-4600 Dortmund 50 (DE)

(56) Entgegenhaltungen:
- US-A- 4 165 446
- US-A- 4 685 123

## Beschreibung

Die Erfindung betrifft ein Verfahren für eine rechnergesteuerte Vermittlungseinrichtung, bei der an wenigstens einer das jeweilige Endgerät mit der Vermittlungseinrichtung verbindenden Anschlußleitung ein Fernsprechendgerät und weiterhin unmittelbar oder über ein Modem für die Datenübertragung ein Datenendgerät alternativ anschaltbar sind, insbesondere für eine sogenannte Key-Fernsprechvermittlungseinrichtung, mit einer alle Vermittlungsfunktionen sowie leistungsmerkmalsspezifische Funktionen durchführende Steuerrechnereinheit, die Zugriff zu Speicheranordnungen hat, in denen die hierfür notwendigen Steuerdaten abgespeichert sind, und wobei zumindest während des Zeitraums einer Datenübertragung im Sinne eines Datenübertragungsschutzes ihre Steuerbeeinflussung durch vom System oder von anderen Teilnehmerendgeräten angeforderten Steuerabläufe verhindert wird.

Derartige, modern konzipierte Vermittlungseinrichtungen sind nicht nur zur eigentlichen Vermittlungssteuerung, sondern auch zu einer Steuerung bzw. Realisierung zusätzlicher, über den eigentlichen Vermittlungsvorgang hinausgehender Steuervorgänge befähigt. Solche zusätzlichen Funktionen werden im allgemeinen als Leistungsmerkmale bezeichnet. Diese unterschiedlichsten Leistungsmerkmale können entweder bei Belegen der Vermittlungseinrichtung oder während einer bereits bestehenden Gesprächsverbindung in Anspruch genommen werden. Dies kann beispielsweise durch die Wahl bestimmter Ziffern bzw. Ziffernfolgen oder durch die Betätigung sogenannter Funktionstasten erfolgen. Bestimmte Leistungsmerkmale sind von der Art und dem Funktionsumfang der verwendeten Endgeräte abhängig.

Über eine gemeinsame Teilnehmeranschlußeinheit kann eine Anschlußleitung der Vermittlungseinrichtung sowohl mit einem Fernsprechendgerät als auch mit einem Datenendgerät zur Datenübertragung auf den Fernsprechleitungen verbunden sein. Es können damit z.B. Faxnachrichten abgesetzt und empfangen werden oder es kann als Datenendgerät in Verbindung mit einem Modem ein Terminal oder ein Personal Computer dienen. Der für die Datenübertragung notwendige Verbindungsaufbau kann beispielsweise mit dem über die gemeinsame Anschlußleitung dem Datenendgerät zugeordneten Fernsprechendgerät vorgenommen werden. Um eine Störbeeinflussung bei der Datenübertragung durch im Zusammenhang mit dem Fernsprechbetrieb stehende Betriebsabläufe der Vermittlungseinrichtung zu vermeiden, sind bei Anschlüssen der genannten Art für den Kommunikationsdienst "Sprache" permanente Einschränkungen im Leistungsmerkmalsumfang vorzusehen. Es wäre auch möglich, das Datenendgerät direkt mit einer Amtsleitung zu koppeln. Dies hätte noch weitere Einschränkungen zur Folge. Die betreffende Amtsleitung könnte für den Sprechverkehr nur für sogenannte gehende Gespräche benutzt werden.

Durch die US-Patentschrift 4,685,123 ist ein Kommunikationssystem bekannt, an das Fernsprechendgeräte und ihnen jeweils zugeordnete Datenendgeräte anschließbar sind. Neben einem Steuerleitungspaar ist bei diesem Kommunikationssystem ein der Sprachübertragung dienendes Leitungspaar und der Datenübertragung dienendes Leitungspaar vorgesehen. Es kann also zur gleichen Zeit eine Sprechverbindung und eine Datenverbindung bestehen. Die beabsichtigte Datenübertragung wird der Zentrale ausschließlich durch die Betätigung einer entsprechenden Datentaste aufgrund der dadurch initiierten und zur Zentrale übertragenen Information mitgeteilt. Sowohl bezüglich einer Sprechverbindung als auch bezüglich einer Datenverbindung ist ein Leistungsmerkmal vorgesehen, durch das jeweils die störende Beeinflussung der bestehenden Sprechverbindung bzw. Datenübertragung vermieden wird. Nach dem Empfang der Datenübertragungsanforderung, die durch die Betätigung der genannten Taste übermittelt wird, stellt die Steuerung sicher, daß Anforderungen des dem Datenendgerät zugeordneten Fernsprechendgerätes und Anforderungen anderer Teilnehmer die bestehende Datenübertragung nicht störend beeinflussen. Dies ist auch deshalb erforderlich, da die genannten Leitungspaare nicht ausschließlich einer bestimmten Verkehrsart zugeordnet sind, sondern ein Wechsel in der Zuordnung zu einer Verkehrsart erfolgen kann.

Es ist die Aufgabe der Erfindung, für eine Vermittlungseinrichtung mit den eingangs genannten Merkmalen ein Verfahren anzugeben, bei dem in einfache Weise sowohl die Störbeeinflussung einer Datenübertragung verhindert als auch die für die Kommunikationsart "Sprache" sich dadurch ergebenden Einschränkungen reduziert werden.

Dies wird dadurch erreicht, daß für den Anschluß der Endgeräte über die Anschlußleitung zusätzlich zu der im wesentlichen zur Übertragung der Sprachinformationen dienenden Nutzverbindung eine Steuerverbindung zur Vermittlungseinrichtung vorgesehen ist, daß bei einer der Datenübertragung dienenden Verbindung mit dem Datenendgerät der mit dem Verbindungsaufbau und dem Verbindungsabbau im Zusammenhang stehende Kriterienaustausch und gegebenenfalls die Wahlinformationen über die Nutzverbindung erfolgt und bei einer Gesprächsverbindung des der betreffenden Anschlußleitung gleichfalls zugeordneten Fernsprechendgerätes die Übertragung der Wahl- und Steuerinformationen über die Steuerverbindung vorgenommen wird, daß durch die von der zentralen Steuerrechnereinheit vorgenommenen Bewertung der auf der Nutzverbindung und der Steuerverbindung übertragenen Kriterien bzw. Informationen die Verbindungsart unterschieden wird, so daß während des dadurch registrierbaren Zeitraums der Datenübertragung der temporäre Datenübertragungsschutz bewirkbar ist, und daß gleichzeitig bei Handhabungen am zugeordneten Fernsprechendgerät, die eine Informationsübertragung über die Steuerverbindung bedingen, während des Bestehens des Datenübertragungsschutzes die normalerweise damit verknüpften Folgefunktionen unterdrückt werden.

Es dient also erfindungsgemäß als Kriterium für den Beginn einer Datenübertragung, zumindest diejenige Kriterienübermittlung, die bei einer beabsichtigten Datenübertragung ausschließlich über die sogenannte Nutzverbindung übermittelt wird. Neben der Realisierung dieser Nutzverbindung und der davon getrennten Steuerverbindung durch jeweils ein Adernpaar können diese auch - getrennt durch unterschiedliche Zeitlagen - physikalisch auf dem gleichen Übertragungsmedium, z.B. einer Zweidraht-Teilnehmeranschlußleitung, realisiert sein. Durch eine einfache Überwachung der an der Nutzverbindung und an der Steuerverbindung entstehenden Kriterien kann demnach die Steuerrechnereinheit feststellen, welches der parallel angeschlossenen Geräte aktiv ist. Bei einer Fernsprechverbindung erfolgt nämlich die Übermittlung der Wahlinformationen, die von dem dem Datenendgerät zugeordneten Fernsprechendgerät erzeugt werden, auf der Steuerverbindung. Auf dieser Steuerverbindung werden auch andere, beispielsweise durch Tastenbetätigung ausgelöste und eventuell Leistungsmerkmale anfordernde Kriterien übertragen. Durch die Bewertung der auf den genannten Verbindungen übertragenen Informationen ist die zentrale Steuerung befähigt, die jeweils aktuelle Verkehrsart zu registrieren. Es kann somit in einfacher Weise in denjenigen Fällen, in denen das Datenendgerät an die jeweilige Nutzverbindung wirksam angeschaltet wurde, durch die zentrale Steuerung ein temporärer Datenschutz bewirkt werden. Das bedeutet, daß also nicht generell, sondern nur während der tatsächlichen Übertragungszeit die Zugriffsmöglichkeit des Systems oder anderer Teilnehmer zu dem betreffenden Anschluß ausgeschlossen ist. Es wird z.B. während dieser Übertragungszeit die Sperrung solcher Leistungsmerkmale bewirkt, bei denen normalerweise akustische Signale an die Nutzverbindung angelegt werden. Dies wäre beispielseweise bei einer Rufeinblendung, beim Anklopfen oder beim Aufschalten der Fall. Da also der Kriterienaustausch beim Aufbau bzw. beim Abbau einer Datenverbindung über die genannte Nutzverbindung erfolgt, kann durch das damit ermöglichte Erkennen einer Datenübertragung während des vorgenommenen Datenschutzes gemäß einer Weiterbildung der Erfindung für den Datenverkehr eine gesonderte Gesprächsdatenerfassung vorgenommen werden. Dies kann bei einer zentralen Gebührenerfassung durch eine gesonderte Kennzeichnung der betreffenden Gebührenimpulse vorgenommen werden oder die empfangenen Gebührenimpulse werden in Abhängigkeit vom temporären Datenschutz auf einen Datengesprächszähler bzw. auf einen Sprachgesprächszähler aufaddiert.

Weitere vorteilhafte Ausgestaltungen der Erfindung sind den restlichen Unteransprüchen zu entnehmen.

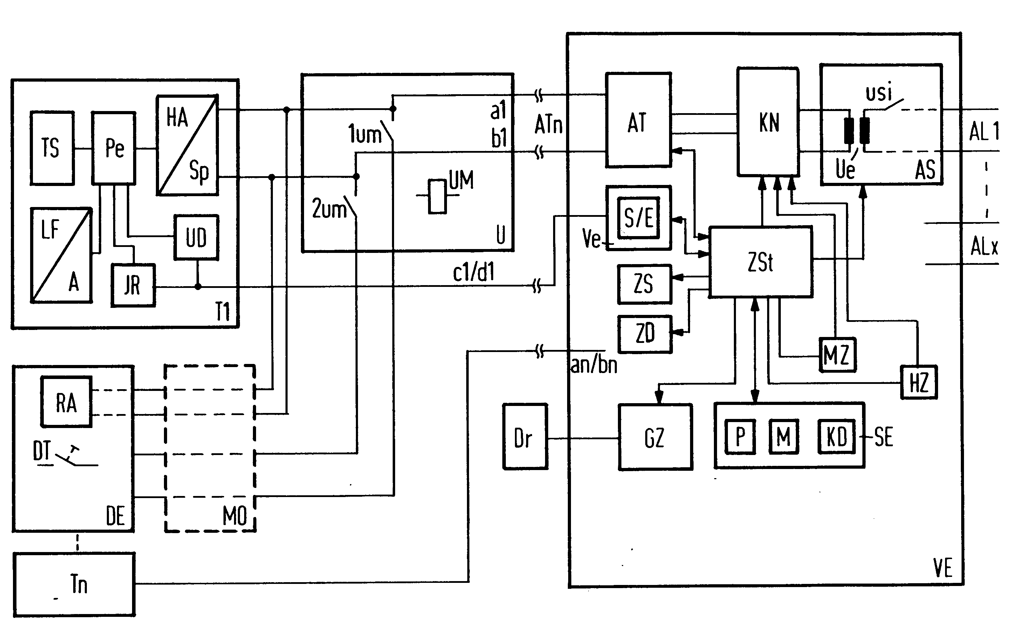

Das Verfahren gemäß der Erfindung wird nun anhand der Figur beschrieben. Die Figur zeigt eine schematische Darstellung einer Fernsprechvermittlungseinrichtung VE, an die Teilnehmerendeinrichtungen T1...Tn sternförmig angeschlossen sind. Die Sprachübertragung soll im Ausführungsbeispiel auf analoge Weise erfolgen. Für den Anschluß der Key-Endeinrichtungen wird eine vieradrige Anschlußleitung verwendet, die jeweils aus einem die Nutzverbindung darstellenden Sprechadernpaar a/b und einem die Steuerverbindung darstellenden Signalisierungsadernpaar c/d besteht. Bei einem ausschließlich digitalen Vermittlungssystem wäre die Steuerverbindung und die für die Übertragung der Sprachinformationen vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage gebildet werden könnte. Über eine Umschalteeinrichtung U kann anstelle des vieradrig mit der Vermittlungseinrichtung verbundenen Key-Fernsprechendgerätes T1 ein Datenendgerät DE an die Sprechadern a1/b1 angeschaltet werden. Die Endeinrichtungen T1...Tn bzw. DE werden über eine Anschalteinheit AT, die unter anderem die Rufanschaltung und die Indikation der a/b-Leitungsschleife beinhaltet, mit einer elektronischen Koppeleinrichtung KN verbunden. Für zu einer öffentlichen Vermittlungsstelle führende Leitungen AL1...ALx erfolgt dies jeweils über eine zugeordnete Anschlußeinheit AS. Diese enthält u. a. einen Kontakt usi, der in dem durch einen Übertrager Ue zum Koppelfeld hin abgeriegelten Amtsleitungskreis liegt.

Die Steuerungsaufgaben der Vermittlungseinrichtung VE übernimmt die zentrale Steuerrechnereinheit ZSt, die mit den genannten Einheiten AT bzw. AS und den weiteren Systemkomponenten, wie beispielsweise der Koppeleinrichtung KN, einer für die Bildung der Mehrfrequenzcode-Zeichen dienenden Einheit MZ und einer für die Erzeugung der Hörtöne zuständigen Einheit HZ gekoppelt ist. Eine solche Kopplung besteht weiterhin zwischen dieser Steuerrechnereinheit und einer jedem Signalisierungsadernpaar c/d zugeordneten Verarbeitungseinheit Ve, die ein Sendeteil S und ein Empfangsteil E enthält. Unter Einbeziehung der Verarbeitungseinheit Ve kann über die Signalisierungsadern c/d eine wechselseitige Informationsübertragung zwischen einem Key-Fernsprechendgerät T1 und der Steuerrechnereinheit ZSt vorgenommen werden. Es können beispielsweise die von der Steuerrechnereinheit ZSt zu dem Fernsprechendgerät T1 über die Signalisierungsadern c/d übertragenen Informationen durch eine binäre Spannungsmodulation und die in der Gegenrichtung zu übertragenden Informationen durch eine binäre Strommodulation übermittelt werden. Mit letzterer werden dann beispielsweise die an der jeweiligen Endeinrichtung vorgenommenen Handhabungen, wie beispielsweise die Betätigung einzelner Tasten TS, signalisiert. Dies soll beispielsweise in Verbindung mit der Steuereinheit Pe durch die Einheit IR erfolgen. Die in der Gegenrichtung aufgrund der vorgesehenen Spannungsmodulation an den jeweiligen Signalisierungsadern c/d auftretenden Informationsbits werden in Zusammenarbeit mit der Einheit UD durch diese Steuereinheit Pe registriert. Sie können beispielsweise Einstellinformationen für optische Anzeigeelemente LF oder für ein Display A betreffen. Über das jeweilige Sprechadernpaar a/b werden die Sprachinformationen übertragen.

Mit diesen Sprechadern a/b ist die Sprechschaltung Sp verbunden. Sie dient im Zusammenhang mit dem Handapparat HA der Verarbeitung der übertragenen Sprachinformationen und bildet den Leitungsabschluß.

Die von einem Key-Fernsprechendgerät T1 abgegebenen Kriterien werden über die Signalisierungsadern c1/d1 übermittelt, während die von einem Datenendgerät DE abgegebenen Kriterien ausschließlich über die Nutzverbindung, d. h. im Ausführungsbeispiel über das Sprechadernpaar a1/b1, übermittelt werden. Ebenso würde bei einem lediglich über eine zweidrähtige Anschlußleitung angeschlossenen normalen Fernsprechendgerät, z. B. Fernsprechendgerät Tn, die Übermittlung der z. B. beim Gesprächsaufbau und beim Gesprächsabbau erzeugten Kriterien ausschließlich über das Adernpaar an/bn erfolgen.

Eine derartige Vermittlungseinrichtung ist in ihrer Grundstruktur bekannt. Es erübrigt sich also insoweit eine detaillierte Darstellung der schaltungstechnischen Realisierung als auch eine Beschreibung der Vorgänge bei einem Verbindungsaufbau und dem Verbindungsabbau. Es sei noch erwähnt, daß die zentrale Steuerrechnereinheit ZSt einen Zugriff zu den in einer Speichereinrichtung SE abgelegten Daten hat. Diese betreffen unter anderem das in dem Speicher P abgelegte gesamte Systemprogramm und die zu ihm gehörenden und einem Arbeitsspeicher M enthaltenen betriebstechnischen Daten. In einem Speicherteil KD sind die Kundendaten abgelegt. Hierzu gehören beispielsweise die für die Vermittlungseinrichtung vorgesehenen Kurzrufnummern und die den einzelnen Teilnehmerendgeräten T1, Tn zugeteilten Berechtigungen. Es sind also darin auch die durch einzelne Teilnehmer in Anspruch zu nehmenden Leistungsmerkmale abgespeichert. Das Konfigurieren der in dem Kundendatenspeicher KD enthaltenen Daten kann beispielsweise über die Eingabetastatur einer als Betriebsterminal festlegbaren Endeinrichtung erfolgen.

An das Sprechadernpaar a/b (Nutzverbindung) einer vieradrigen Anschlußleitung ATn, über die das Key-Fernsprechendgerät T1 mit der Vermittlungseinrichtung VE verbunden ist, kann auch eine Datenübertragung in gehender und kommender Richtung vorgenommen werden. Zu diesem Zweck ist dem Fernsprechendgerät T1 ein Datenendgerät DE zugeordnet. Dieses Datenendgerät kann beispielsweise ein Fax-Gerät sein. Soll von einem solchen Faxgerät unter Einbeziehung der Vermittlungseinrichtung VE über eine Leitung AL1 eine Verbindung zu einem entsprechenden Partnergerät hergestellt werden, so kann der Aufbau dieser Verbindung in gleicher Weise wie der Aufbau einer Fernsprechverbindung durch einen Teilnehmer mittels des zugeordneten Parallelgerätes T1 erfolgen. Die hierzu erzeugten Befehle werden der zentralen Steuerrechnereinheit ZSt über die Steuerverbindung, d.h. also über die Signalisierungsadern c1/d1 zugeführt. Es werden also darüber beispielsweise das Abnehmen des Handapperates und die abgegebenen Wählziffern übertragen. Nachdem das Empfängergerät durch einen entsprechenden Quittungston seine Empfangsbereitschaft signalisiert hat kann durch die Betätigung einer Datenübertragungstaste DT die Datenübertragung wie bekannt eingeleitet werden. Es wird das der Umschalteinrichtung U zugehörige Relais UM gesetzt, so daß über seine Kontakte 1um und 2um die Adern a1 und b1 vom Fernsprechendgerät abgeschaltet und zum Faxgerät DE umgeschaltet werden. Dies erfolgt innerhalb einer solch kurzen Zeit, daß die aufgebaute Verbindung nicht ausgelöst wird. Die Umschalteinrichtung U, die auch als rein elektronische Einheit auszubilden ist, kann auch eine Teileinheit des Datenendgerätes DE sein. Der nach dem Schleifenschluß zwischen den miteinander verbundenen Datenendgeräten vor der eigentlichen Datenübertragung vorgenommene Kriterienaustausch erfolgt ausschließlich über das Adernpaar a1/b1. Dies wird durch eine entsprechende Indikation durch die zentrale Steuerrechnereinheit ZSt erkannt. Durch eine in der Anschlußeinheit AT enthaltene Indikationseinheit werden die an den Adern a1 und b1 entstehenden Kriterien durch die Steuerrechnereinheit erfaßt. In Verbindung mit der abgespeicherten Information, daß der betreffende Anschluß sowohl zu einem Fernsprechendgerät als auch alternativ zu einem Datenendgerät führt, kann die wirksame Anschaltung des Datenendgerätes festgestellt werden. Bei einer Gesprächsverbindung würde nämlich der Kriterienaustausch wie bereits erwähnt über die Adern c1 und d1 erfolgen, so daß in einem solchen Fall über die Verarbeitungseinheit Ve die Steuerrechnereinheit die Art des Endgerätes erkennen kann. Ist beispielsweise die Vermittlungseinrichtung als hybrides Key-Telefonsystem konzipiert so können als Gesprächendgeräte sowohl vieradrige anzuschließende Key-Fernsprechendgeräte als auch normale zweiadrig anzuschließende Fernsprechendgerät beliebig an die einzelnen Ports angeschlossen werden. Dies setzt dann voraus, daß in jedem Fall für die Adern a und b eine Indikation stattfindet. Im Falle der Zuordnung eines Datenendgerätes zu einem vieradrig anzuschließenden Fernsprechendgerät läßt sich dann ohne zusätzliche Maßnahmen wie bereits geschildert die Anschaltung eines Datenendgerätes in gleicher Weise wie seine Abschaltung feststellen. Damit wird ermöglicht, daß durch die Steuerrechnereinhelt ZSt ein temporärer Datenschutz vorgenommen werden kann. Es wird also sichergestellt, daß alle vom System oder von einem anderen Teilnehmer ausgehenden Anforderungen, die z. B. die Anschaltung von Tönen an die betreffenden Sprechadern a und b zur Folge haben würden, bis zur Beendigung der Datenübertragung ignoriert werden. Es ist also während einer solchen Datenübertragung der betreffende Anschluß beispielsweise vor internem Anklopfen und vor externer Rufeinblendung bzw. vor Aufschalten geschützt. Rufeinblendung erfolgt z. B. dann, wenn für ein sich im Besetztzustand befindliches Fernsprechendgerät auf der ihm zugeordneten externen Leitung ein Ruf ansteht. Darüberhinaus werden die im Zustand eines solchen temporären Datenschutzes vorgenommenen Handhabungen an dem zugeordneten Key-Fernsprechendgerät T1, also beispielsweise das Abheben des Handapparates oder die Betätigung von Tasten nicht berücksichtigt. In den Zeiten, in denen also keine Datenübertragung stattfindet, können in Bezug auf das zugeordnete Fernsprechendgerät diese genannten Leistungsmerkmale angefordert werden. Der Zustand eines eingeschalteten temporären Datenschutzes kann durch die Steuerrechnereinheit über die Verarbeitungseinheit Ve am Fernsprechendgerät beispielsweise auf einem Display A zur Anzeige gebracht werden. Die hierfür notwendigen Informationen werden dem Fernsprechendgerät T1 über die Signalisierungsader c und d zugeführt, so daß dadurch eine Datenübertragung nicht beeinflußt wird.

Hat der Teilnehmer nachdem er die den Start signalisierende Taste DT betätigt hat vor Ende der Fax-Übertragung den Handapparat aufgelegt, so wird mit Ende der vorgenommenen Datenübertragung die gesamte Verbindung getrennt. Bleibt der Handapparat jedoch abgehoben und die Fax-Übertragung wird beendet, so wird die Verbindung noch nicht ausgelöst so daß die Möglichkeit eines anschließenden Gespräches besteht.

Falls eine Taste DT an einer Datenendeinrichtung nicht vorhanden ist kann auch eine Taste des Fernsprechendgerätes T1 für diese Funktion programmiert werden. Um in einem solchen Fall dann die Übermittlung der betreffenden Umschaltesignale sicherzustellen, sind zusätzliche Steuerungsmaßnahmen zu treffen. Es ist auch möglich, die Datenverbindung unmittelbar vom Datenendgerät aus durch eine vermittels eines Wahlautomaten vorgenommene Wahl aufzubauen. Nach der Umschaltung durch die umschalteinrichtung U erkennt die Steuerrechnereinheit in gleicher Weise wie dies bereits geschildert wurde aufgrund der über diese Sprechadern übermittelten Wahlinformationen, daß es sich um Datenverkehr handelt. Bei einem vom Fernsprechendgerät T1 ausgehenden Gespräch würden nämlich diese Wahlinformationen über die Signalisierungsadern c1/d1 geliefert. Nachdem erkannt wurde, daß die Verbindung von einem Datenendgerät ausgeht wird automatisch der temporäre Datenschutz aktiviert.

Bei einem ankommenden Gespräch wird der Ruf zunächst sowohl am Fernsprechendgerät T1 als auch am Datenendgerät DE signalisiert. Nach einer bestimmten Ruffolge wird durch die Rufauswertung RA im Datenendgerät DE durch Betätigung des Relais UM die umschaltung auf das Datenendgerät vollzogen. Die nachfolgend gebildete Leitungsschleife und der zwischen den miteinander verbundenen Fax-Geräten vorgenommene Kriterienaustausch wird wiederum in der Vermittlungseinrichtung erkannt. Dies führt dann zur Einschaltung des temporären Datenschutzes, so daß während der Zeit der Datenübertragung bestimmte Leistungsmerkmale die eine Störbeeinflussung der Datenübertragung mit sich bringen, nicht angefordert werden können.

Anstelle eines Fax-Endgerätes könnte als Datenendgerät DE auch ein Terminal oder ein Personalcomputer angeschlossen sein. Dies erfordert dann über eine geeignete Schnittstelle die Anschaltung eines Modems MO, wie dies in der Figur durch die strichlierte Einheit angedeutet ist. Die Umschalteeinrichtung U könnte dann eine Teileinheit des Modems MO darstellen. Nach der umschaltung der Adern a und b auf das Modem kann dann aufgrund der über diese Adern bei einem Datenverkehr vorgenommenen Kriterienübermittlung, in gleicher Weise wie dies für die Datenübertragung mit einem Fax-Endgerät geschildert wurde, der temporäre Datenschutz eingeleitet werden.

Mit dem Kriterium des temporären Datenschutzes könnte bei einer zentralen Gebührenerfassung für den jeweiligen Datengesprächsabschnitt ein gezielter Datensatz ausgegeben werden, wodurch eine Zuordnung der eingetroffenen Gebührenimpulse zu Daten- bzw. Sprachgesprächen möglich ist. Die in einer zentralen Gebührenerfassungseinrichtung GZ abgespeicherten Daten können über die Druckeinrichtung Dr ausgedruckt werden. Bei einer anderen Art der Gebührenerfassung können zwei getrennte Summenzähler, nämlich der für die Aufaddierung der bei einem Sprachgespräch anfallenden Gebührenimpulse vorhandene Zähler ZS und der für die Aufaddierung der bei einem Datengespräch anfallenden Gebührenimpulse vorhandene Zähler ZD dienen. Es kann also in einfacher Weise eine gesonderte Gesprächsdatenerfassung vorgenommen werden. Die zugehörigen Zähler können unmittelbar der Vermittlungseinrichtung VE zugeordnet sein. Der Zählerstand kann auf Anforderung durch einen Teilnehmer zu seiner Fernsprechstation übermittelt und dort z. B. auf dem vorhandenen Display A angezeigt werden.

## Patentansprüche

1. Verfahren für eine rechnergesteuerte Vermittlungseinrichtung (VE), bei der an wenigstens einer das jeweilige Endgerät mit der Vermittlungseinrichtung verbindenden Anschlußleitung (ATn) ein Fernsprechendgerät (T1) und weiterhin unmittelbar oder über ein Modem (MO) für die Datenübertragung ein Datenendgerät (DE) alternativ anschaltbar sind, insbesondere für eine sogenannte Key-Fernsprechvermittlungseinrichtung, mit einer alle Vermittlungsfunktionen sowohl leitungsmerkmalsspezifische Funktionen durchführenden Steuerrechnereinheit (ZSt), die Zugriff zu Speicheranordnungen (SE) hat, in denen die hierfür notwendigen Steuerdaten abgespeichert sind, und wobei zumindest während des Zeitraumes einer Datenübertragung im Sinne eines Datenübertragungsschutzes ihre Steuerbeeinflussung durch vom System oder von anderen Teilnehmerendgeräten angeforderten Steuerabläufe verhindert wird,
**dadurch gekennzeichnet**,
daß für den Anschluß der Endgeräte über die Anschlußleitung (ATn) zusätzlich zu der im wesentlichen zur Übertragung der Sprachinformationen dienenden Nutzverbindung (a1/b1...an/bn) eine Steuerverbindung (c1/d1) zur Vermittlungseinrichtung vorgesehen ist, daß bei einer der Datenübertragung dienenden Verbindung mit dem Datenendgerät (DE) der mit dem Verbindungsaufbau und dem Verbindungsabbau im Zusammenhang stehende Kriterienaustausch und gegebenenfalls die Wahlinformationen über die Nutzverbindung (a1/b1) erfolgt und bei einer Gesprächsverbindung des der betreffenden Anschlußleitung (ATn) gleichfalls zugeordneten Fernsprechendgerätes (T1) die Übertragung der Wahl- und Steuerinformationen über die Steuerverbindung (c1/d1) vorgenommen wird, daß durch die von der zentralen Steuerrechnereinheit (ZSt) vorgenommene Bewertung der auf der Nutzverbindung (a1/b1) und der Steuerverbindung (c1/d1) übertragenen Kriterien bzw. Informationen die Verbindungsart unterschieden wird, so daß während des dadurch registrierbaren Zeitraumes der Datenübertragung der temporäre Datenübertragungsschutz bewirkbar ist, und daß gleichzeitig bei Handhabungen am zugeordneten Fernsprechendgerät, die eine Informationsübertragung über die Steuerverbindung (c1/d1) bedingen, während des Bestehens des Datenübertragungsschutzes die normalerweise damit verknüpften Folgefunktionen unterdrückt werden.

2. Verfahren nach Anspruch 1,
**dadurch gekennzeichnet**,
daß zumindest die Steuerabläufe für solche Leistungsmerkmale unterbunden werden, bei denen normalerweise akustische Signale über die Nutzverbindung (a1/b1) übertragen werden.

3. Verfahren nach Anspruch 1,
**dadurch gekennzeichnet**,
daß sowohl die Nutzverbindung (a1/b1) als auch die Steuerverbindung (c1/d1) jeweils durch ein Adernpaar realisiert ist.

4. Verfahren nach Anspruch 1,
**dadurch gekennzeichnet**,
daß diejenigen Gebührenimpulse, die während des Bestehens des temporären Datenübertragungsschutzes anfallen, bei ihrer zentralen Erfassung (GZ) gesondert gekennzeichnet werden, so daß eine nach Datengesprächen und Sprachgesprächen getrennten Ausgabe der angefallenen Gebühren erfolgen kann.

5. Verfahren nach Anspruch 1,
**dadurch gekennzeichnet**,
daß für denjenigen Teilnehmeranschluß, an den alternativ ein Fernsprechendgerät (T1) und ein Datenendgerät (DE) anschaltbar ist, bei einer Erfassung der Zählimpulse durch diesem Anschluß zugeordnete Summenzähler jeder Gesprächsart ein eigener Summenzähler (ZS, ZD) zugeordnet ist.

6. Verfahren nach einem der vorhergehenden Ansprüche,
**dadurch gekennzeichnet**,
daß bei gehendem Verkehr die Umschaltung der Nutzverbindung (a1/b1) vom Fernsprechendgerät (T1) auf das Datenendgerät (DE) nach dem vermittels des Fernsprechendgerätes (T1) vorgenommenen Verbindungsaufbau durch die Betätigung einer entsprechenden Datenübertragungstaste (DT) erfolgt und aufgrund der über eine mit der Nutzverbindung (a/b) gekoppelten Anschalteeinheit (AT) an die Steuerrechnereinheit (ZSt) gelieferten Informationen der temporäre Datenübertragungsschutz bewirkt wird.

7. Verfahren nach einem der vorhergehenden Ansprüche,
**dadurch gekennzeichnet**,
daß bei gehendem Verkehr unmittelbar die Anschaltung des Datenendgerätes (DE) an die Nutzverbindung (al/bl) erfolgt und die Wahlinformationen automatisch durch das Datenendgerät (DE) unmittelbar oder durch ein vorgeschaltetes Modem (MO) abgegeben werden und durch die von der auf der Nutzverbindung übertragenen Wahlinformation durch eine entsprechende Auswertung abgeleitete Zustandsinformation durch die Steuerrechnereinheit (ZSt) der temporäre Datenübertragungsschutz bewirkt wird.

8. Verfahren nach einem der vorhergehenden Ansprüche,
**dadurch gekennzeichnet**,
daß während des Bestehens des temporären Datenübertragungsschutzes eine entsprechende Anzeige (A) am Fernsprechendgerät (T1) erfolgt.

## Claims

1. Process for a computer-controlled switching device (VE), in which a telephone terminal (T1) and furthermore a data terminal (DE) can be alternatively connected, the latter directly or via a modem (MO) for data transmission, to at least one branch line (ATn) connecting the respective terminal to the switching device, in particular for a so-called key telephone exchange, with a control computer unit (ZSt) which executes all switching functions and feature-specific functions and has access to memory arrangements (SE), in which the control data necessary for this are stored, and in which process, at least during the time period of a data transmission, its influencing by control sequences requested by the system or by other subscriber terminals is prevented in the sense of a data transmission protection, characterised in that, for the connection of the terminals via the branch line (ATn), in addition to the useful connection (a1/b1... an/bn) serving essentially for the transmission of the voice information, there is provided a control connection (c1/d1) to the switching device, in that, in the case of a connection to the data terminal (DE) serving for data transmission, the exchange of criteria concerned with the connection setup and connection cleardown and, if appropriate, the dialling information takes place via the useful connection and, in the case of a call connection of the telephone terminal (T1) likewise assigned to the branch line (ATn) concerned, the transmission of the dialling and control information is performed via the control connection (c1/d1), in that the type of connection is distinguished by the assessment performed by the central control computer unit (ZSt) of the criteria or information transmitted on the useful connection (a1/b1) and the control connection (c1/d1), so that the temporary data transmission protection can be effected during the time period of data transmission which can be registered as a result, and in that at the same time, if there are actions on the assigned telephone terminal which require an information transmission via the control connection (c1/d1), the consequent functions normally associated therewith are suppressed during the existence of the data transmission protection.

2. Process according to Claim 1, characterised in that at least the control sequences for such features which normally involve transmitting acoustic signals via the useful connection (a1/b1) are suppressed.

3. Process according to Claim 1, characterised in that both the useful connection (a1/b1) and the control connection (c1/d1) are in each case realised by a pair of wires.

4. Process according to Claim 1, characterised in that the charge pulses which occur during the existence of the temporary data transmission protection are separately identified during their central registration (GZ), so that a separate output of the charges occurring according to data calls and voice calls can be carried out.

5. Process according to Claim 1, characterised in that, for the subscriber connection to which a telephone terminal (T1) and a data terminal (DE) can be alternatively connected, in a registration of the counting pulses by summators assigned to this connection each type of call is assigned its own summator (ZS, ZD).

6. Process according to one of the preceding claims, characterised in that, in the case of outgoing traffic, the changeover of the useful connection (a1/b1) from the telephone terminal (T1) to the data terminal (DE) takes place after the connection setup, performed by means of the telephone terminal (T1) by the actuation of a corresponding data transmission key (DT), and the temporary data transmission protection is effected on the basis of the information delivered via a connecting unit (AT), coupled to the useful connection (a/b), to the control computer unit (ZSt).

7. Process according to one of the preceding claims, characterised in that, in the case of outgoing traffic, the connection of the data terminal (DE) to the useful connection (a1/b1) takes place directly and the dialling information is emitted automatically by the data terminal (DE) directly or by an upstream modem (MO) and the temporary data transmission protection is effected by the dialling information transmitted on the useful connection by a corresponding evaluation of derived status information by the control computer unit (ZSt).

8. Process according to one of the preceding claims, characterised in that, during the existence of the temporary data transmission protection, a corresponding display (A) takes place on the telephone terminal (T1).

## Revendications

1. Procédé pour un dispositif (VE) de commutation commandé par ordinateur, dans lequel peuvent être connectés en alternance un terminal (T1) téléphonique et en outre directement ou par un modem (MO) destiné à la transmission de données un terminal (DE) de données à au moins une ligne (ATn) de raccordement reliant le terminal considéré au dispositif de commutation, notamment pour ce qu'on appelle un dispositif de commutation téléphonique à touches, le dispositif de commutation comportant une unité (ZSt) d'ordinateur de commande, qui effectue toutes les fonctions de commutation ainsi que des fonctions spécifiques aux facilités offertes aux abonnés, et qui a accès à des dispositifs (SE) de mémoire, dans lesquels sont mémorisées les données de commandes nécessaires à cet effet, l'influence de la commande de l'unité d'ordinateur de commande étant empêchée au moins pendant la durée d'une transmission de données, dans le sens d'une protection de la transmission de données, par des opérations de commande demandées par le système ou par d'autres terminaux d'abonnés,
caractérisé en ce que
il est prévu, pour le raccordement des terminaux par l'intermédiaire de la ligne (ATn) de raccordement, une connexion (c1/d1) de commande vers le dispositif de commutation en plus de la connexion utile (a1/b1 ... an/bn) servant en général à la transmission des informations vocales, I'échange de critères se rapportant à l'établissement de connexions et à la suppression de connexions, et éventuellement la transmission des informations de sélection, s'effectue par la connexion (a1/b1) utile lors d'une connexion servant à la transmission de données avec le terminal (DE) de données et la transmission des informations de sélection et de commande s'effectuant par l'intermédiaire de la connexion (c1/d1) de commande lors d'une connexion de conversation du terminal (T1) téléphonique associé de même à la ligne (ATn) de raccordement concernée, on distingue le mode de connexion, par évaluation, effectuée par l'unité centrale (ZSt) d'ordinateur de commande, des critères ou informations transmis sur la connexion (a1/b1) utile et sur la connexion (c1/d1) de commande, de sorte que l'on peut activer temporairement la protection de la transmission de données pendant la durée, pendant laquelle il est ainsi possible d'enregistrer, de la transmission de données et l'on peut supprimer en même temps, pendant l'établissement de la protection de transmission de données, par des manipulations sur le terminal téléphonique associé qui provoque une transmission d'informations par l'intermédiaire de la connexion (c1/d1) de commande, les fonctions offertes aux abonnés, qui y sont normalement liées.

2. Procédé suivant la revendication 1,
caractérisé en ce que,
on interdit au moins les opérations de commande pour les facilités offertes aux abonnés, pour lesquelles il est transmis normalement des signaux sonores par la connexion (a1/b1) utile.

3. Procédé suivant la revendication 1,
caractérisé en ce que,
à la fois la connexion (a1/b1) utile et la connexion (c1/d1) de commande s'effectuent chacune par une paire de fils.

4. Procédé suivant la revendication 1,
caractérisé en ce que,
on caractérise de façon distincte celles des impulsions de taxation, qui se produisent pendant l'établissement de la protection temporaire de transmission de données, dans leur partie centrale (GZ) de taxation, de sorte que l'on peut effectuer une sortie séparée, suivant les échanges de données et les échanges vocaux, des taxes échues.

5. Procédé suivant la revendication 1,
caractérisé en ce que,
il est associé, pour le raccordement d'abonnés, auquel on peut connecter au choix un terminal (T1) téléphonique et un terminal (DE) de données, lors d'une taxation des impulsions de comptage par des compteurs de sommes associés à ce raccordement, un compteur (ZS, ZD) de sommes propres, à chaque mode d'échange.

6. Procédé suivant l'une des revendications précédentes,
caractérisé en ce que,
au cours du trafic, la commutation de la connexion utile (a1/b1) du terminal (T1) téléphonique au terminal (DE) de données s'effectue après l'établissement de connexion effectué au moyen du terminal (T1) téléphonique en actionnant une touche (DT) correspondante de transmission de données et on provoque la protection temporaire de la transmission de données, à partir des informations, fournies par l'intermédiaire d'une unité (AT) de raccordement couplée à la connexion (a/b) utile, à l'unité (ZSt) d'ordinateur de commande.

7. Procédé suivant l'une des revendications précédentes,
caractérisé en ce que,
au cours du trafic le raccordement du terminal (DE) de données s'effectue directement à la connexion (a1/b1) utile et les informations de sélection sont fournies automatiquement par le terminal (DE) de données directement ou par un modem (MO) branché en amont et la protection temporaire de la transmission de données est provoquée par l'information d'état obtenue à partir de l'information de sélection transmise sur la connexion utile par une évaluation correspondante, par l'unité (ZSt) d'ordinateur de commande.

8. Procédé suivant l'une des revendications précédentes,
caractérisé en ce que,
il s'effectue pendant l'établissement de la protection temporaire de la transmission de données, une indication (A) correspondante sur le terminal (T1) téléphonique.
